# EUROPÄISCHE PATENTSCHRIFT

(11) **EP 3 091 619 B1**
(45) Veröffentlichungstag und Bekanntmachung des Hinweises auf die Patenterteilung: **18.04.2018**
(21) Anmeldenummer: 16001020.3
(22) Anmeldetag: 04.05.2016
(51) Int. Cl.: H01R 43/20, H01R 4/30, H01R 4/36, H02G 1/14, H01R 11/09, H01R 43/048, H01R 4/20

(54) **VERFAHREN ZUM VERBINDEN VON HOCHSPANNUNGSKABELN MIT MEHRDRÄHTIGEN LEITERN**
METHOD FOR CONNECTING HIGH VOLTAGE CABLES WITH MULTI-CORE CONDUCTORS
PROCEDE DE RACCORDEMENT DE CABLES HAUTE TENSION PAR DES CONDUCTEURS MULTIBRINS

(30) Priorität: 08.05.2015 DE 102015005993
(43) Veröffentlichungstag der Anmeldung: 09.11.2016
(73) Patentinhaber: NKT GmbH & Co. KG, 51061 Köln (DE)
(72) Erfinder: Jazgar, Maciej, 51061 Köln (DE); Willén, Dag, 21851 Klagshamn (SE); Thidemann, Carsten, 3630 Jaegerspris (DK)
(74) Vertreter: Feder Walter Ebert

(56) Entgegenhaltungen:
- EP-A1- 2 226 899
- EP-A1- 2 683 034
- DE-A1- 19 906 831
- US-A1- 2013 056 268
- US-B1- 8 550 842

## Beschreibung

Die Erfindung betrifft ein Verfahren zum elektrisch leitenden Verbinden von mehrdrähtigen elektrischen Leitern von zwei Hochspannungskabeln, die jeweils einen Mantel aus Isoliermaterial ausweisen. Vorzugsweise soll die Erfindung eingesetzt werden für als Millikenleiter ausgeführte Leiter.

Vorrichtungen zum Verbinden von zwei Leitern, die auch eindrähtig ausgeführt sein können, sind bekannt und auf dem Markt erhältlich.

Beispielsweise wird zur Verbindung von relativ dünnen aus verseilten Drähten bestehenden Leitern, vorzugsweise zur Anwendung zu elektronischen Zwecken, vorgeschlagen, die Leiter in dem Verbindermittel zu verpressen (als Crimp-Vorgang) oder mittels das Verbindermittel durchdringende Schrauben zu verschrauben. Solche Verfahren bzw. Verbindermittel können der US 8 585 448 B2 entnommen werden.

Für die Verbindung der Leiter von Hochspannungskabeln, die vorzugsweise aus Kupfer oder aus Aluminium bestehen, muss die Dicke und der Querschnitt der Leiter der Kabel berücksichtigt werden. Zur Festlegung und Kontaktierung der Leiter in dem Leiterverbinder, der in der Regel als Rohrstück ausgebildet ist, werden Schrauben verwendet, die beispielsweise als Abscherschrauben ausgeführt sind. Die Köpfe solcher Schrauben scheren beim Erreichen eines bestimmten Momentes, d. h. beim Erreichen einer genügend großen Kontaktkraft zwischen Schraube und Leiter ab.

Die von den Schrauben erzeugte Kontaktkraft stellt die Verbindung der Leiter mit dem Leiterverbinder und die Verbindung der einzelnen Drähte der Leiter untereinander her. Sie soll während der gesamten geforderten Lebensdauer der Vorrichtung aufrecht erhalten bleiben. Der elektrische Strom fließt in einer solchen Vorrichtung von einem Leiter über den Leiterverbinder zum anderen Leiter mit entsprechend relativ hohen Übergangswiderständen.

Bei mehrdrähtigen Leitern kommt hinzu, dass die einzelnen Drähte derselben beim durch das Anziehen der Schraube bewirkten Verdichten aneinander reiben. Das führt dazu, dass im Innern der Leiter ein geringerer Druck erzeugt wird, als an der Oberfläche derselben. Bei der Verbindung von mehrdrähtigen Leitern mit großem Querschnitt bzw. bei segmentierten Leitern, sogenannten Millikenleitern, kann das zu Problemen führen. Solche Probleme sind insbesondere dann zu erwarten, wenn die mehrdrähtigen Leiter mit einer Isolationsbeschichtung ausgeführt sind. Isolationsbeschichtungen können als Oxidationsschicht, als Lackschicht oder als Emailleüberzug angefertigt sein.

Vorrichtungen und Verfahren zum elektrisch leitenden Verbinden von als Millikenleiter ausgeführte Hochspannungskabeln sind bekannt, bei denen ein Rohrstück als Leiterverbinder eingesetzt wird (siehe EP 2226899 A1 oder EP 2683034 A1).

Bei den genannten Verfahren werden mehrdrähtige Leiter mit einer Isolationsbeschichtung elektrisch leitend verbunden.

Wenn der Kontakt der Einzeldrähte im Innern der Leiter durch die erzeugte Klemmung unzureichend ist, kommt es zu einer überdurchschnittlichen Erwärmung. Bei Leitern aus Aluminium führt die Erwärmung außerdem zu verstärktem Fließen des Materials und dadurch schon nach kurzer Zeit zu einem weiteren Rückgang des Kontaktdrucks. Die elektrische Verbindung zwischen den Leitern ist dann relativ schnell unbrauchbar.

Der Kontakt der Einzeldrähte im Innern der Leiter wird auch durch eine vorhandene Isolationsbeschichtung vermindert. Zur Verbesserung des Leitwerts könnte vorgesehen werden, die Isolationsschicht der Einzeldrähte vor der Herstellung der Verbindung zu entfernen. Allerdings ist dies mit extrem hohem Arbeitsaufwand verbunden.

Der Erfindung liegt die Aufgabe zugrunde, die zuvor geschilderten Verfahren, insbesondere bei dem elektrischen Verbinden von mit einer Isolationsbeschichtung versehenen mehrdrähtigen Leitern so zu gestalten, dass der Leitwert verbessert ist.

Die Lösung der Aufgabe wird durch die Merkmale des Hauptanspruchs angegeben. Weitergehende Ausgestaltungen des Verfahrens werden in Unteransprüchen formuliert.

Der Kern des Verfahrens besteht aus folgenden Verfahrensschritten:
(A) die Leiter der beiden Hochspannungskabel - im folgenden kurz mit, Kabel' bezeichnet - werden an ihren Enden durch Entfernen des jeweiligen Mantels (einschließlich eines metallischen Schirms) freigelegt,
(B) ein als Leiterverbinder ausgebildetes Rohrstück aus elektrisch gut leitendem Metall wird bereitgestellt,
(C) die beiden Leiter werden von unterschiedlichen Seiten in den Leiterverbinder eingeschoben, so dass sie etwa in der Mitte des Leiterverbinders mit ihren Stirnseiten aneinander liegen,
(D) mit einem Verpresswerkzeug wird der Leiterverbinder scheibenweise derart verpresst, dass auf dem Umfang des Leiterverbinders eine als regelmäßiges Vieleck ausgebildete Presskontur entsteht,
(E) senkrecht zu den im Verpressen entstandenen ebenen Flächen der Presskontur werden in radialer Richtung verlaufende Gewindebohrlöcher zur Aufnahme von Feststell- und Kontaktschrauben - im weiteren nur mit ,Kontaktschrauben' bezeichnet - eingebracht, so dass auf der Länge des Leiterverbinders und über seinen Umfang verteilt eine Vielzahl von Gewindebohrlöcher gebildet werden,
(F) durch die Gewindebohrlöcher hindurch werden in radiale Richtung verlaufende Bohrungen in den Leitern erzeugt, die in die Leiter der beiden Kabel eindringen,
(G) die Kontaktschrauben werden eingeschraubt.

Die mehrdrähtigen Leiter können rund oder segmentförmig ausgebildet sein. Sie können aus Kupfer oder aus Aluminium bestehen. Vorzugsweise kann es sich um verdichtete und verseilte Einzeldrahtleiter handeln.

Mit einem Verpresswerkzeug werden vieleckige Presskonturen auf dem Leiterverbinder als Pressling erzeugt. Die regelmäßigen Vielecke der Presskonturen mit ebenen Flächen können vorzugsweise hexagonal (Kontur als Sechseck) oder oktogonal sein (Kontur als Achteck), Bei Leitern mit kleinerem Querschnitt können diese hexagonal, bzw. bei Leitern mit größerem Querschnitt können diese oktogonal ausgebildet sein. Mehrdrähtige, und auch Millikenleiter haben Leiterquerschnitte von 1200 bis 3200 mm², wobei ein typischer Wert 2500 mm² beträgt. Ein typischer Wert eines Durchmessers des zuvor typisch genannten Leiters beträgt 65 mm. Der Isoliermaterialmantel kann eine Dicke von etwa 10 bis 30 mm umfassen. Die Kontaktschrauben können als Abscherschrauben ausgebildet sein, so dass die Köpfe der Kontaktschrauben beim Erreichen eines bestimmten Moments, d. h. beim Erreichen einer genügend großen Kontaktkraft zwischen Kontaktschrauben und Leiter abscheren. Abschließend wird der Leiterverbinder als Muffe ausgebildet, somit der Leiterverbinder mit einem geeigneten Isoliermantel umhüllt.

Als Verpresswerkzeug wird ein geeignetes Werkzeug verwendet. Diese Werkzeuge sind in der Kabelverbindertechnik bekannt. Der Pressvorgang ist mit einer Verdichtung der Einzelleiter verbunden.

Die Presskonturen liegen scheibenweise parallel in Längsrichtung des Leiterverbinders, also in Ebenen senkrecht zur Achse des Leiterverbinders hintereinander. Vorzugsweise können je zu verbindendes Kabelende drei oder vier Scheiben, bzw. Ebenen von Presskonturen hergestellt werden. Vorzugsweise kann der Vorgang der Herstellung der Presskonturen von der Mitte des Leiterverbinders beginnend schrittweise nach dem Ende des Leiterverbinders hin erfolgen.

Das Verfahren kann auch angewendet werden für das Verbinden zweier Hochspannungskabeln mit unterschiedlichen Leiterdurchmessern.

Die Konfektionierung des Leiterverbinders auf den Kabelenden kann nacheinander auf je einem ersten dann auf dem zweiten Kabelende vorgenommen werden. Es kann jedoch die Herstellung der Presskonturen und die Verschraubung der Kontaktschrauben zwischen beiden Seiten des Leiterverbinders abwechselnd hin und her erfolgen.

Die als Abscherschrauben verwendeten Kontaktschrauben sind aus elektrisch gut leitendem Metall hergestellt.

Die Leiter sind mittels der Kontaktschrauben mit dem Leiterverbinder elektrisch verbunden und mit dem Verpressvorgang mechanisch auf Dauer fest gesichert.

Bei dem vorgestellten Verfahren ist die Entfernung der Isolationsschicht der Einzeldrähte nicht notwendig.

Weiterführende Merkmale des Verfahrens werden im folgenden aufgezählt.

Die Gewindebohrlöcher können in Umfangsrichtung von einer ersten zu einer zweiten scheibenweise hergestellten Presskontur gegeneinander versetzt liegen.

Der Leiterverbinder sollte mit einer Wanddicke bereitgestellt werden, die einen größeren Leiterquerschnitt aufweist als der Leiterquerschnitt der zu verbindenden Leiter. Der Leiterquerschnitt des Leiterverbinders sollte als mindestens so groß sein, wie der Leiterquerschnitt des zu verbindenden Leiters.

Je nach Art der zu verbindenden Kabel und der Durchmesser der Kabelleiter kann eine unterschiedliche Anzahl und unterschiedliche Verteilung der Gewindebohrlöcher vorgenommen werden. So können in mindestens der Hälfte der Flächen des regelmäßigen Vielecks der Presskontur Gewindebohrlöcher eingebracht werden und über diese Gewindebohrlöcher Kontaktschrauben eingeschraubt werden. Es können in allen Scheiben der Presskonturen oder auch nur in zwei von dreien, oder nur in drei von vieren der Scheiben der Presskonturen Gewindebohrlöcher eingebracht und über diese Gewindebohrlöcher Kontaktschrauben eingeschraubt werden.

Jede Kombination der vorgenannten Möglichkeiten kann im Einzelfall ausgeführt sein. Im Einzelfall entscheidet der Verbindungstyp, nämlich welche Durchmesser die zu verbindenden Leiter haben. Da die Kontaktschrauben in der Tiefe der Bohrung Abstand zu einander haben sollten, ist eine zu enge und dichte Belegung der Presskonturen mit Gewindebohrlöcher nicht immer von Vorteil.

Vorzugsweise liegen die Gewindebohrlöcher in den Presskonturen in Umfangsrichtung von Scheibe zu Scheibe gegeneinander versetzt.

Vorzugsweise werden die Bohrungen in den Leitern als Gewindebohrlöcher erzeugt. Die Bohrungen können jedoch auch glattrandig hergestellt sein. In letzterem Fall können die Kontaktschrauben, die auf ihrer gesamten Länge als Gewindeschrauben ausgebildet sind, in den Leiter hineinschneiden. Typische Gewindeschrauben sind M16- oder M20-Schrauben, wobei die kleineren Gewindeschrauben für geringe Leiterquerschnitte und die größeren Gewindeschrauben für größere Leiterquerschnitte verwenden werden. Das Material der Kontaktschrauben, bzw. Gewindeschrauben kann aus Messing oder aus einer Kupferlegierung bestehen. Vorzugsweise werden als Abscherschrauben ausgebildete Kontaktschrauben verwendet.

Vorzugsweise kann die Tiefe der Bohrungen in den Leitern 70 % bis 85 % des Radius der Leiter betragen. Typischerweise haben Millikenleiter mit 2500 mm² einen Durchmesser von 65 mm. Mit dem zuvor genannten Merkmal liegen somit die Tiefen der Bohrungen im Bereich von 23 bis 26 mm. Ein zentraler Bereich oder Strang des Leiters mit einem Radius von 5 bis 10 mm wird bei diesem Verfahren nicht von Bohrungen berührt.

Die Erfindung wird in einer Figurenbeschreibung in mehreren Figuren dargestellt, diese zeigen im Einzelnen:
Fig. 1: einen Leiterverbinder in perspektivischer Darstellung,
Fig. 2: einen Schnitt durch die Verbindung zweier Leiterenden und
Fig. 3: einen Leiterverbinder in Draufsicht mit Kontaktschrauben ohne Leiter.

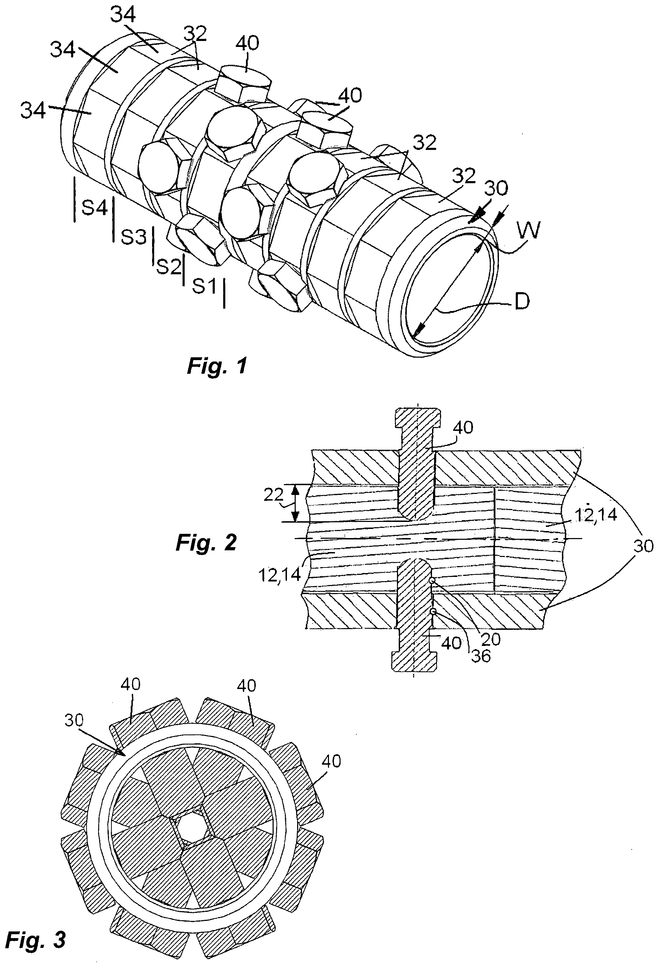

Die Fig. 1 zeigt perspektivisch ein als Leiterverbinder 30 ausgebildetes Rohrstück aus elektrisch gut leitendem Metall, beispielsweise aus Elektrolytkupfer. Der Leiterverbinder hat einen Innendurchmesser D, der dem Durchmesser des Leiters angepasst ist und eine Wanddicke W. Dieser Leiterverbinder 30 wurde mit einem (vorzugsweise hydraulischem) Verpresswerkzeug derart verpresst, dass auf dem Umfang des Leiterverbinders 30 oktogonale Presskonturen 32 entstanden sind. Acht Presskonturen 32 liegen scheibenweise parallel in Längsrichtung des Leiterverbinders, also in acht Ebenen senkrecht zur Achse des Leiterverbinders. Die Presskonturen 32 weisen ebene Pressflächen 34 auf. Die ebenen Flächen 34 der Presskonturen liegen von Scheibe zu Scheibe axial parallel hintereinander.

Die Scheiben der Presskonturen 32 werden in Fig. 1 mit den Bezugszeichen S1 bis S4 bezeichnet. Die Scheiben S1 bis S4 liegen auf der Seite des ersten zu verbindenden Leiters. Auf der anderen Seite des Leiterverbinders liegen ebenfalls vier Scheiben (in der Figur jedoch ohne Bezugszeichen).

Die Presskonturen werden beginnend in der Mitte, dort wo die Stirnflächen der Leiter zusammentreffen, Scheibe für Scheibe in acht Arbeitsgängen hergestellt. Bei jeder Pressung entstehen Presskonturen mit

Senkrecht zu den im Verpressen entstandenen, ebenen Flächen 34 der Presskontur sind Kontaktschrauben 40 in zuvor mittels Gewindebohrern hergestellte Gewindebohrlöcher 36 eingeschraubt. Vier Kontaktschrauben 40 befinden in der der Stirnseite jeden Leiters nächstliegenden Scheibe S1. In der zweiten Scheibe S2 befinden sich ebenfalls vier Kontaktschrauben 40, die gegen die Kontaktschrauben in der ersten Scheibe um 45° versetzt eingebracht sind.

Bei einer oktogonalen Pressung sind die ebenen Pressflächen 34 um je 45° auf den Umfang versetzt vorhanden. Bei einer hexagonalen Pressung wären die Pressflächen um je 60° auf den Umfang versetzt. Die Pressung der einzelnen Scheiben kann jedoch auch bei jedem Pressvorgang um einen gewissen Winkel verdreht vorgenommen werden (nicht in der Figur dargestellt).

Der Verbinder kann für jeden Typ mehrdrähtigen Leiter verwendet werden. mit oder ohne Segment-Teilung.

Die Figur 2 zeigt einen Querschnitt durch die Endlagen zweier Leiter 12 mit gleichem Durchmesser in einem Leiterverbinder 30. Die Leiterenden 14 liegen mit ihren Stirnflächen gegeneinander gekehrt im Leiterverbinder. Es sind zwei Kontaktschrauben 40 gezeigt, die vollständig durch die jeweilige Gewindebohrung 36 und die Bohrung 20 in den Leitern eingeschraubt 12 sind. Die Tiefe 22 der Bohrung 20 liegt im Bereich von 70 bis 85 % des Radius der Leiter 12. Ein zentraler Bereich oder Strang des Leiters wird bei diesem Verfahren nicht von Bohrungen berührt. Die Köpfe der Kontaktschrauben 40 sind noch nicht abgeschert, daher sind sie in der Figur noch sichtbar dargestellt. Die Bohrungen im Leiterverbinder sind Gewindebohrlöcher 36, die Bohrungen 20 in den Leitern können als Gewindebohrlöcher oder glattrandig hergestellt sein

In anderen Ausführungsformen kann die Reihenfolge der Belegung der Scheiben mit Kontaktschrauben variieren. Zum Beispiel befinden sich (vier) Kontaktschrauben in der der Stirnseite jeden Leiters nächstliegenden Scheibe. In der zweiten folgenden Scheibe - jeweils gezählt von der Mitte des Leiterverbinders an - könnten dann keine Kontaktschrauben vorhanden sein. Erst in der dann folgenden dritten Scheibe würden sich wieder vier Kontaktschrauben befinden, die gegen die Kontaktschrauben in der ersten Scheibe um 45° versetzt eingebracht sind. Die vierte Scheibe wäre dann ohne Belegung mit Kontaktschrauben

Die Fig. 3 zeigt eine axiale Draufsicht auf den Leiterverbinder 30 mit eingeschraubten Kontaktschrauben 40, wobei der Leiter nicht dargestellt ist. Die Kontaktschrauben 40 (in einer Scheibe) liegen um 90° versetzt und sind in radialer Richtung und rechtwinklig zur Leiterachse in den Leiter eingeschraubt. Die Kontaktschrauben 40 sind hintereinander regelmäßig um 45° über den Umfang verteil versetzt. Die Darstellung in Fig. 3 zeigt einen Leiterverbinder für eine Verbindung von Leitern mit relativ kleinem Leiterquerschnitt. Im Vergleich zwischen Durchmesser des Leiterverbinders und Durchmesser der Gewindeschrauben wird deutlich, dass bei größeren Leiterdurchmessern mehr Platz ist für Kontaktschrauben, so dass auch sechs oder acht Kontaktschrauben je Scheibe eingebracht sein können.

Die Kontaktschrauben können als Abscherschrauben ausgebildet sein, so dass die Köpfe der Kontaktschrauben beim Erreichen eines bestimmten Moments, d. h. beim Erreichen einer genügend großen Kontaktkraft zwischen Kontaktschrauben und Leiter abscheren. Abschließend wird der Leiterverbinder als Muffe ausgebildet, somit wird der Leiterverbinder mit einem geeigneten Isoliermantel umhüllt und die Abschirmungen der beiden Hochspannungskabel untereinander elektrisch verbunden.

### Bezugszeichen

- 12: elektrische Leiter
- 14: Enden der Leiter
- 20: Leiterbohrung
- 22: Bohrtiefe
- 30: Leiterverbinder (als Rohrstück)
- 32: Presskontur
- 34: ebene Pressflächen der Presskontur
- S1 .. S4: Scheibe
- 36: Gewindebohrloch
- 40: Feststell- und Kontaktschraube
- D: Durchmesser
- W: Wanddicke

## Patentansprüche

1. Verfahren zum elektrisch leitenden Verbinden von mehrdrähtigen elektrischen Leitern von zwei Hochspannungskabeln, die jeweils von einem Isoliermateriatmantel umgeben sind,
wobei folgende Verfahrensschritte ausgeführt werden:
(A) die Leiter (12) der beiden Hochspannungskabel werden an ihren Enden (14) durch Entfernen des jeweiligen Mantels freigelegt,
(B) ein als Leiterverbinder (30) ausgebildetes metallisches Rohrstück wird bereitgestellt,
(C) die beiden Leiter (12) werden von unterschiedlichen Seiten in den Leiterverbinder (30) eingeschoben, so dass sie etwa in der Mitte des Leiterverbinders (30) mit ihren Stirnseiten aneinander liegen,
(D) mit einem Verpresswerkzeug wird der Leiterverbinder (30) scheibenweise derart verpresst, dass auf dem Umfang des Leiterverbinders (30) regelmäßige Vielecke als Presskonturen entstehen,
(E) senkrecht zu den im Verpressen entstandenen ebenen Flächen (34) der Presskonturen (32) werden im Leiterverbinder (30) Gewindebohrlöcher (36) zur Aufnahme von Kontaktschrauben (40) erzeugt,
(F) durch die Gewindebohrlöcher (36) hindurch werden in radiale Richtung verlaufende Bohrungen (20) in den Leitern (12) erzeugt,
(G) die Kontaktschrauben (40) werden eingeschraubt.

2. Verfahren nach Anspruch 1, **dadurch gekennzeichnet, dass** die mehrdrähtigen elektrischen Leiter als Leiter (12) vom Millikentyp ausgeführt sind.

3. Verfahren nach einem der vorhergehenden Ansprüche, **dadurch gekennzeichnet, dass** das Verpressen der Leiter (12) im Leiterverbinder (30) nacheinander auf jedem Kabelende einzeln erfolgt, oder das Verpressen der Leiter (12) im Leiterverbinder (30) abwechselnd auf jedem Kabelende erfolgt.

4. Verfahren nach einem der vorhergehenden Ansprüche, **dadurch gekennzeichnet, dass** in mindestens der Hälfte der beim Verpressen entstandenen ebenen Flächen (34) der Presskonturen (32) Gewindebohrlöcher (36) eingebracht werden.

5. Verfahren nach den vorhergehenden Ansprüchen 1 bis 3, **dadurch gekennzeichnet, dass** in mindestens der Hälfte der scheibenweise hergestellten Presskonturen (32) Gewindebohrlöcher (36) eingebracht werden.

6. Verfahren nach einem der vorhergehenden Ansprüche, **dadurch gekennzeichnet, dass** der Leiterverbinder (30) mit einer Wanddicke (W) bereitgestellt wird, die einen größeren Leiterquerschnitt aufweist als der Leiterquerschnitt der zu verbindenden Leiter (12).

7. Verfahren nach einem der vorhergehenden Ansprüche, **dadurch gekennzeichnet, dass** die Bohrungen (20) in den Leitern (12) als Gewindebohrlöcher erzeugt werden.

8. Verfahren nach einem der vorhergehenden Ansprüche, **dadurch gekennzeichnet, dass** das Verfahren angewendet wird für das Verbinden zweier Hochspannungskabel mit unterschiedlichen Leiterdurchmessern.

9. Verfahren nach einem der vorhergehenden Ansprüche, **dadurch gekennzeichnet, dass** die Tiefe (22) der Bohrungen (20) in den Leitern (12) einen zentralen Bereich der Leiter unberührt lässt.

10. Verfahren nach einem der vorhergehenden Ansprüche, **dadurch gekennzeichnet, dass** die Tiefe (22) der Bohrungen (20) in den Leitern (12) 70 % bis 85 % des Radius der Leiter (12) beträgt.

11. Verfahren nach einem der vorhergehenden Ansprüche, **dadurch gekennzeichnet, dass** die Kontaktschrauben (40) aus elektrisch gut leitendem Metall verwendet werden und dass als Abscherschrauben ausgebildete Kontaktschrauben (40) verwendet werden.

## Claims

1. Method for electrically conductively connecting multicore electrical conductors of two high-voltage cables which are each surrounded by an insulating material sheath,
wherein the following method steps are executed:
(A) the conductors (12) of the two high-voltage cables are exposed at their ends (14) by removing the respective sheath,
(B) a tubular metal piece, which is in the form of a conductive connector (30), is provided,
(C) the two conductors (12) are inserted into the conductor connector (30) from different sides, so that they are situated against one another by way of their end sides in the middle of the conductor connector (30),
(D) a pressing tool is used to press the conductor connector (30) disc by disc in such a way that regular polygons are produced as press contours over the circumference of the conductor connector (30),
(E) threaded bore holes (36) for receiving contact screws (40) are produced in the conductor connector (30) perpendicular to the flat surfaces (34) of the press contours (32) which are produced during pressing,
(F) bores (20) which run in the radial direction are produced in the conductors (12) through the threaded bore holes (36), and
(G) the contact screws (40) are screwed in.

2. Method according to Claim 1, **characterized in that** the multicore electrical conductors are designed as Milliken-type conductors (12).

3. Method according to either of the preceding claims, **characterized in that** the conductors (12) in the conductor connector (30) are individually pressed onto each cable end in succession, or the conductors (12) in the conductor connector (30) are pressed onto each cable end alternately.

4. Method according to one of the preceding claims, **characterized in that** threaded bore holes (36) are made in at least half of the flat surfaces (34) of the press contours (32), which flat surfaces are produced during pressing.

5. Method according to one of the preceding Claims 1 to 3, **characterized in that** threaded bore holes (36) are made in at least half of the press contours (32) which are produced disc by disc.

6. Method according to one of the preceding claims, **characterized in that** the conductor connector (30) is provided with a wall thickness (W) which has a larger conductor cross section than the conductor cross section of the conductors (12) which are to be connected.

7. Method according to one of the preceding claims, **characterized in that** the bores (20) in the conductors (12) are produced as threaded bore holes.

8. Method according to one of the preceding claims, **characterized in that** the method is used for connecting two high-voltage cables having different conductor diameters.

9. Method according to one of the preceding claims, **characterized in that** the depth (22) of the bores (20) in the conductors (12) leaves a central region of the conductors untouched.

10. Method according to one of the preceding claims, **characterized in that** the depth (22) of the bores (20) in the conductors (12) is 70% to 85% of the radius of the conductors (12).

11. Method according to one of the preceding claims, **characterized in that** the contact screws (40) are used from electrically highly conductive metal, and **in that** contact screws (40) which are in the form of shear screws are used.

## Revendications

1. Procédé pour relier de manière électriquement conductrice des conducteurs électriques multifilaires de deux câbles à haute tension, lesquels sont respectivement entourés d'une gaine en matériau isolant, les étapes de procédé suivantes étant exécutées :
(A) les conducteurs (12) des deux câbles à haute tension sont dénudés au niveau de leurs extrémités (14) en retirant la gaine correspondante,
(B) une pièce tubulaire métallique, réalisée sous la forme d'un raccord de conducteurs (30), est mise à disposition,
(C) les deux conducteurs (12) sont enfilés dans le raccord de conducteurs (30) depuis des côtés différents, de telle sorte qu'ils reposent l'un contre l'autre par leurs côtés frontaux approximativement au centre du raccord de conducteurs (30),
(D) le raccord de conducteurs (30) est pressé à la manière d'une rondelle avec un outil de pressage de manière à produire des polygones réguliers sous la forme de profilés de pressage sur le pourtour du raccord de conducteurs (30),
(E) des trous forés taraudés (36) destinés à accueillir des vis de contact (40) sont produits dans le raccord de conducteurs (30) perpendiculairement aux surfaces planes (34) des profilés de pressage (32) qui sont obtenues lors du pressage,
(F) des perçages (20) qui s'étendent dans la direction radiale sont produits dans les conducteurs (12) à travers les trous forés taraudés (36),
(G) les vis de contact (40) sont vissées.

2. Procédé selon la revendication 1, **caractérisé en ce que** les conducteurs électriques multifilaires sont réalisés sous la forme de conducteurs (12) de type à âme segmentée.

3. Procédé selon l'une des revendications précédentes, **caractérisé en ce que** le pressage des conducteurs (12) dans le raccord de conducteurs (30) est effectué successivement sur chaque extrémité de câble, ou le pressage des conducteurs (12) dans le raccord de conducteurs (30) est effectué en alternance sur chaque extrémité de câble.

4. Procédé selon l'une des revendications précédentes, **caractérisé en ce que** des trous forés taraudés (36) sont pratiqués au moins dans la moitié des surfaces planes (34) des profilés de pressage (32) qui sont obtenues lors du pressage.

5. Procédé selon l'une des revendications précédentes 1 à 3, **caractérisé en ce que** des trous forés taraudés (36) sont pratiqués au moins dans la moitié des profilés de pressage (32) réalisés à la manière d'une rondelle.

6. Procédé selon l'une des revendications précédentes, **caractérisé en ce que** le raccord de conducteurs (30) est mis à disposition avec une épaisseur de paroi (W) qui présente une section transversale de conducteur supérieure à la section transversale de conducteur des conducteurs (12) à relier.

7. Procédé selon l'une des revendications précédentes, **caractérisé en ce que** les perçages (20) dans les conducteurs (12) sont produits sous la forme de trous forés taraudés.

8. Procédé selon l'une des revendications précédentes, **caractérisé en ce que** le procédé est utilisé pour relier deux câbles à haute tension ayant des diamètres de conducteur différents.

9. Procédé selon l'une des revendications précédentes, **caractérisé en ce que** la profondeur (22) des perçages (20) dans les conducteurs (12) épargne une zone centrale du conducteur.

10. Procédé selon l'une des revendications précédentes, **caractérisé en ce que** la profondeur (22) des perçages (20) dans les conducteurs (12) est égale à 70 % à 85 % du rayon du conducteur (12).

11. Procédé selon l'une des revendications précédentes, **caractérisé en ce que** les vis de contact (40) sont utilisées en matériau bon conducteur électrique et **en ce que** des vis de contact (40) réalisées sous la forme de vis de cisaillement sont utilisées.
